# EUROPEAN PATENT SPECIFICATION

(11) **EP 4 008 180 B1**
(45) Date of publication and mention of the grant of the patent: **08.11.2023**
(21) Application number: 21212355.8
(22) Date of filing: 03.12.2021
(51) Int. Cl.: A01K 39/00, A01K 41/00, A01K 31/18, A01K 31/19

(54) **FEEDING SYSTEM FOR HATCHED CHICKS**
ZUFÜHRSYSTEM FÜR GESCHLÜPFTE KÜKEN
SYSTÈME D'ALIMENTATION POUR POUSSINS ÉCLOS

(30) Priority: 04.12.2020 NL 2027047; 29.12.2020 NL 2027241
(43) Date of publication of application: 08.06.2022
(73) Proprietor: Probroed Holding B.V., 7142 HE Groenlo (NL)
(72) Inventor: Zoet, Gerrit Leendert, Groenlo (NL); Maas, Roel, Groenlo (NL); Paardekooper, Wilhelmus Maria Simon, Groenlo (NL); Verstappen, Frank Reiner Christoffer, Groenlo (NL)
(74) Representative: EDP Patent Attorneys B.V.

(56) References cited:
- KR-B1- 101 972 794
- US-A- 2 127 804

## Description

### FIELD OF THE INVENTION

The invention relates to a system for feeding hatched chicks and the use of the system in a hatching process.

### BACKGROUND OF THE INVENTION

System and methods for feeding hatched chicks subsequently after hatching are known. EP 1 998 611 A2, for instance describes a method and a compartment within an incubator, capable of allowing chicks to feed during the hatching process without reducing hatchability or livability. The compartment includes (a) an incubator egg tray, having an egg tray bottom, and at least one egg tray wall and (b) at least one trough, having a trough bottom, and at least one transparent trough wall, disposed inside the incubator egg tray. Further, KR 10 1 972 794 B1 describes an incubation device (1) capable of feeding. After 18 days of incubation, egg-turning is stopped and the eggs are loaded in a multi-layered cartridge (20) and are preserved by being inserted in a housing (10), a feed storage box (100) is installed at each of a cartridge to store gel-type feed that is prevented from decomposition by using a cooled refrigerant from a refrigerator (30), the feed storage box is opened when the chicks hatch and move around to let chicks to eat feed.

### SUMMARY OF THE INVENTION

In the poultry industry, fertilized eggs are incubated until hatching and subsequently the newly hatched chicks, also referred to as "one day old chicks", may be moved to a chick storage room and transported to a poultry house at a farm. Frequently the chicks are fed for the first time after arrival in the poultry house

It appears desirable to provide the chicks with one or more of water, feed and light directly after they have hatched. Especially, all may be provided. Optionally, feed and water may be combined. In specific embodiments, it appears desirable to provide the chicks with at least feed after they have hatched. This early feeding may lead to healthier chicks, a reduction in the use of antibiotics and better feed conversion. Sometimes therefore troughs with feed and/or water are placed in the incubator hatcher basket, such that the chick may start eating and/or drinking the moment the chick is hatched.

The hatching of eggs (in a hatcher basket) in an incubator chamber (especially in a "hatcher") may typically occur over a period of one to two days. Therefore, placing the troughs in the tray and/or filling the troughs is normally done before the first eggs are hatched. Most practically, this is done before the eggs are placed in the hatcher basket (also referred to as "egg tray") or before the hatcher baskets are placed in the incubator (chamber). Because of the temperature in the incubator, the feed may dry out and feed pellets may, e.g., become more compact or firmer. The feed may become less attractive to the chicks to eat. In such systems, the newly hatched chicks may be early fed. However, the chicks may still eat less feed than desirable, and the gain of early feeding may be less than optimal. Further, the feed in the troughs may become contaminated with dust and faeces when the troughs are placed inside the baskets or trays.

Hence, it is an aspect of the invention to provide an alternative system for feeding newly hatched chicks, which obviate(s) one or more of above-described drawbacks. It is a further aspect of the invention to provide an alternative incubator chamber, and an alternative chick storage room which obviate(s) one or more of above-described drawbacks. The present invention may have as object to overcome or ameliorate at least one of the disadvantages of the prior art, or to provide a useful alternative.

In a first aspect, the invention provides a system according to claim 1 comprising a feeding arrangement for feeding hatched chicks in a stack of baskets, especially a stack of hatcher baskets as further defined in the accompanying claims. The feeding arrangement is configured for arranging external from the stack of (hatcher) baskets (comprising hatched chicks). The feeding arrangement comprises (i) a support structure, (ii) a (first) array of lid elements, and (iii) a (second) array of trough elements. The lid elements are connected to the support structure. In embodiments each lid element is connected to the support structure. The trough elements each comprise a trough. Further, the trough elements are (also) connected to the support structure. In further embodiments, each trough element is connected to the support structure. The troughs have a controllable configuration, relative to the lid elements. The troughs may especially have a controllable configuration to the support structure. The controllable configuration comprises at least two trough configurations for each of the troughs. The trough configurations comprise a closed trough configuration and an open trough configuration. In the closed trough configuration, the trough is at least partly closed by at least one of the lid elements. In the open trough configuration, the trough is configured at least partly remote from the at least one of the lid elements. In the open trough configuration the trough is especially accessible, especially a trough content of the trough is accessible (from external of the trough).

Such system allows early feeding of the newly hatched chicks. In such system, feed material provided to the troughs may initially be prevented from dehydration when the trough is in the closed configuration. The troughs may especially first be opened after hatching of the eggs. Moreover, any content of the trough may be shielded (protected) from contamination in the closed configuration of the trough. The trough configuration may in embodiments be controlled from external of the incubator room and may especially allow feeding of the chicks without opening the incubator chamber. In specific embodiments, the troughs may easily be cleaned to enhance hygienic processing. In further embodiments, the system may be configured to guide the chicks to the feed and/or drinking supply. The feeding arrangement is configured to be arranged next to a stack of baskets. The feeding arrangement may be arranged adjacent to a hatcher pallet trolley (comprising a stack of hatcher baskets). The system allows providing feed to the chicks in the stack of baskets using troughs arranged external from the baskets.

In specific embodiments, the invention provides a system according to claim 1 comprising a feeding arrangement for feeding hatched chicks in a stack of (hatcher) baskets, wherein the feeding arrangement comprises: (i) a support structure, (ii) a first array of lid elements, wherein (each of) the lid elements (is) are connected to the support structure, and (iii) a second array of trough elements, each (trough element) comprising a trough, wherein (each of) the trough elements (is) are connected to the support structure, wherein the troughs have a controllable configuration relative to the support structure (and/or to the lid elements);wherein the controllable configuration comprises at least two trough configurations for each of the troughs, wherein: (i) in a closed trough configuration, the trough is at least partly closed by at least one of the lid elements and (ii) in an open trough configuration, the trough is configured at least partly remote from the at least one of the lid elements, wherein (a trough content of) the trough is accessible, and as further defined in the accompanying claims.

Herein, the term "trough" especially relates to a feed trough. A trough is especially an elongated open container/channel for animals for eating out and/or drinking from. Herein, it may be described that the trough is closed (or "inaccessible") or that the trough is open (or "accessible"). This may especially relate to the accessibility to any content, such as feed and/or water, that may be arranged in the trough. If the trough is closed, an animal (being in the reach of the trough) may not be able to eat or drink from the trough (because the trough content is closed or locked in the trough by a lid or any further closing element). In contrast to that, if the trough is open or accessible, the animal is able to eat or drink from the trough.

Herein, the term "trough" especially refers to a trough configured for feed (material), especially for eating out of (by chicks). The trough may have a (longitudinal) axis. Moreover, herein terms like "parallel to the trough" and "the direction of the trough" may especially relate to a direction of the axis of the trough. The lid elements are especially configured to at least partly close the troughs. The lid elements may therefore also especially have an elongated shape. The lid elements may especially (also) have a (longitudinal) axis. The troughs are further especially arranged external from the baskets, especially at a location allowing chicks inside the baskets to eat or drink from (feed (or a drink) provided in) the troughs (when the trough is accessible).

The system comprises an array of trough elements, especially wherein the trough element comprises a trough. As such, it may also be described that in embodiments, the system comprises an array of troughs. The term "array" in phrases like array of trough elements and array of troughs may especially refer to an ordered series of trough elements or troughs, respectively. The troughs (or trough elements) or at least a subset of (a total number of) the troughs (trough elements) may e.g. be arranged parallel to each other. The troughs/trough elements (or a subset) of the troughs/trough elements may be arranged in a plane. A first trough/trough element (of the array of troughs/trough elements) may especially be substantially identical to at least a subset of the other troughs/trough elements (of the array of troughs/trough elements).

Likewise, the term "array of lid elements" may refer to an ordered series of lid elements. The lid elements or at least a subset of the lid elements may e.g. be arranged parallel to each other. The lid elements (or a subset (of a total number)) of the lid elements may be arranged in a plane. Moreover (at least a subset of) the lid elements may especially be configured parallel to each other and especially parallel to (at least a subset of) the troughs. Further, a first lid element (of the array of lid elements) may especially be substantially identical to at least a subset of the other lid elements (of the array of lid elements).

The term "subset of" such as a "subset of the troughs", a "subset of the lid elements" and comparable phrases especially relates to a subset of a total number of a specific element (such as the troughs, the lid elements, etc.). The subset may especially comprise any arbitrary number of the total number of the specific element. The subset may, e.g., comprise 2 of the specific elements, such as at least 4 of the specific elements, or at least 10 of the specific elements, etc. Furthermore, the subset may in embodiments comprise at least 10%, such as at least 25%, or e.g. at least 50% of a total number of the specific element.

The trough may be a straight trough. Yet in embodiments, the trough may be curved and/or or may e.g. comprise one or more angles. Likewise, the lid element may be straight. In embodiments, the lid element may be curved and/or comprises one or more angles. The plane described herein (such as comprising the lid elements) may (also) be a flat plane. Yet in embodiments, the plane may be curved. In further embodiments, the plane may (further) comprise one or more angles.

The terms "trough", "trough element" and "lid element" may refer to a plurality of troughs, a plurality of trough elements, and a plurality of lid elements, respectively. Moreover, if a feature is explained with respect to e.g. a trough element or e.g. a lid element, this may also be true for other trough elements or e.g. lid elements.

To discriminate between the array of troughs /trough element and the array of lid elements, herein also the term "first array" is especially used in relation to the lid elements and the term "second array" in relation to the trough elements, and especially also in relation to the troughs. Hence, the terms "array of lid elements", "first array of lid elements", and "first array" may be used interchangeably. Also the terms "second array of trough elements", "array of trough elements", and "second array" may be used interchangeably. Moreover, because (each of) the trough elements comprise a trough, it may also be described that the system comprises "an array of troughs", or e.g. "a second array of troughs". Moreover, the term "second" in "second array of trough elements" (or second array of troughs) does not necessarily imply that the system also comprises a 'first' array of trough elements or troughs. Yet, a first or further array of trough elements is also not excluded by this definition. Likewise, a further array of lid elements is not excluded.

The trough is especially at least partly closed (and "inaccessible") by one or more of the lid elements in the closed configuration. The trough may further be closed by other elements of the feeding arrangement or the support system. Especially, in the closed configuration, feed material, such as feed pellets are at least partly protected from dehydration. Furthermore, feed material (solid and/or liquid) may be protected from contamination. Especially, the trough is (substantially completely) closed in the closed configuration. Controlling the trough configuration especially refers to changing the trough element's, especially the trough's, position (or configuration) relative to the lid element position (or configuration) (and vice versa).

Herein also the terms "closed configuration" and "open configuration" may be used to refer to the "closed trough configuration" and the "open trough configuration", respectively. Likewise, the terms "first open configuration" and "second open configuration" may be used to refer to the "first open trough configuration" and the "second open trough configuration", respectively (see further below).

In embodiments, the lid elements are movably connected to the support structure. The lid elements may be configured for translating relative to the trough elements. Additionally or alternatively, in further embodiments, the trough elements are movably connected to the support structure. The trough elements may especially be configured to translate relative to the lid elements. Additionally or alternatively, in embodiments, the trough elements are configured to pivot relative to the support structure. Moreover, in further embodiments, the trough elements are configured to pivot relative to the lid elements. In embodiments, the lid elements may pivot relative to the support structure (and especially also to the trough elements (or troughs). The trough elements are specially configured movable relative to the lid elements. Moreover especially one or more of the trough elements may be configured mobile with respect to one or more of the lid elements. Especially at least one trough element is configured mobile to at least one (respective) lid element.

Hence, one or more of (i) the lid elements are movably connected to the support structure, wherein the lid elements are configured to translate relative to the trough elements, and (ii) the trough elements are movably connected to the support structure, wherein (iia) the trough elements are configured to translate relative to the lid elements and/or (iib) the trough elements are configured to pivot relative to the support structure.

In specific embodiments the lid elements are statically connected (fixed) to the support structure. In further specific embodiments, the trough elements are pivotably connected to the support structure, especially wherein in the open trough configuration, the trough is pivoted away from the support structure. Especially, each of the troughs is configured for pivoting around a pivot axis of the trough element (comprising the trough). The pivot axis (of the trough element) is especially configured remote from the trough. Additionally or alternatively the lid elements are pivotably connected to the support structure. In embodiments, the lid element is pivoted relative to the trough element (and the support structure) for configuring the trough (from the closed trough configuration) to the open trough configuration.

Herein, especially, the term pivots away (in relation to the trough) is used to indicate that the trough element may pivot and especially based on the pivoting of the trough element, a distance between the support structure and the trough may increase (wherein the trough is pivoted away). Moreover, herein the phrase "pivoting the trough elements" and "pivoting the troughs" may be used interchangeably. Further pivoting the troughs may in embodiments relate to pivoting the troughs away from the support structure.

The trough element may further comprise a coupling element, especially connected to the trough. The coupling element may be configured for connecting the trough element to the support structure. In embodiments, the coupling element may be a sliding coupling element. In further embodiments, the coupling element may be a hinge element. In embodiments, the support structure comprises one or more (counter) parts configured to receive the coupling element (for providing the movable connection). In further embodiments, the lid element (also) comprises a coupling element. In embodiments, the coupling element may be configured for connecting the lid element to the support structure.

The term "coupling element" may refer to more than one (different) coupling elements. In embodiments, e.g., the trough element comprises two coupling elements and at least one trough. The trough is especially arranged between the coupling elements. In further embodiments the trough element and the lid element each comprises one or more (different) coupling elements.

Hence, in further specific embodiments, the invention provides in embodiments a system comprising a feeding arrangement, in specific embodiments for feeding hatched chicks in a stack of (hatcher) baskets, wherein the feeding arrangement comprises (i) a support structure comprising a first array of lid elements, (wherein the lid elements are) (especially statically) connected to the support structure and (ii) a second array of trough elements (especially each trough element) comprising a trough, wherein the trough elements are (especially pivotably) connected to the support structure, wherein the troughs have a controllable configuration relative to the lid elements, especially to the support structure; wherein the controllable configuration comprises at least two trough configurations for each of the troughs, wherein (i) in a closed trough configuration, the trough is at least partly closed by at least one of the lid elements; and (ii) in an open trough configuration, the trough is pivoted away from the support structure, especially wherein (a trough content of) the trough is accessible as further defined in the accompanying claims.

In further embodiments, the open trough configuration comprises a first open trough configuration and a second open trough configuration, wherein (during operation) (iia) in the first open trough configuration, the trough is arranged for hosting feed material in the trough, and (iib) in the second open trough configuration, the trough is arranged for releasing feed material under the influence of gravity. Especially, in embodiments the troughs may be configured to host trough content. Especially, the trough content may comprise or consist of feed material.

The terms "feed material" and "feed" may relate to any kind of feed and/or drinking material. Feed may comprise dry feed material, wet feed material, pellets, granules, particles, porridge, etc. In embodiments feed may further relate to a (nutritious) liquid. It may be understood that the troughs may also house water. Hence, the term feed may herein also be used in relation to (drinking) water with or without further nutrients.

The feeding arrangement may further comprise a trough configuration system, especially configured for controlling the trough configuration of the one or more of the troughs. In embodiments, the trough configuration system is configured for translating one or more of the lid elements. Additionally or alternatively, the trough configuration system may in embodiments be configured for translating one or more of the trough elements. In yet further embodiments, that may be combined with one or more of the embodiments described above, the trough configuration system is configured for pivoting one or more of the troughs (elements). In embodiments, the trough configuration system is configured for pivoting one or more of the troughs away (from the support structure). In yet further embodiments, the trough configuration system may be configured for pivoting one or more of the lid elements. The trough configuration system may especially be configured for controlling the trough configuration of at least a subset of the troughs.

The system, especially, further comprises a control system. The control system may be functionally connected to the trough configuration system (and/or any other element of the system that may be controlled). The trough configuration system is, e.g., in embodiments configured for simultaneously pivoting at least a subset of the troughs (and/or for translating at least u subset of troughs and/or the lid elements). The trough configuration system is especially functionally coupled to the control system. In embodiments, the trough configuration system comprises a control unit and/or a control system.

In further embodiments, the trough configuration system comprises a lifting element. The lifting element may be functionally coupled to an element that may be translated. The lifting element may in embodiments be coupled to one or more of the lid elements. The lifting element may in further embodiments be functionally coupled to one or more of the troughs. In embodiments the lifting element may be configured to translate the one or more lid elements and/or to translate the one or more troughs. The lifting element may especially control the trough configuration. The lifting element may in embodiments be functionally coupled to one or more support elements supporting one or more of the troughs (at least) in the closed configuration. Such system may further be configured such that a (vertical) position of the support element controls the trough configuration of the one or more of the troughs and especially a translation movement of the support element allows the one or more of the troughs to translate especially based on gravity. Additionally or alternatively, the translation movement of the support element may allow the one or more of the troughs to pivot away from the support structure, especially based on gravity. The support element may in embodiments contact (and support) the trough (also) in the open configuration. In further embodiments, the support element may not (always) contact (or support) the trough in the open trough configuration. The support element may, e.g., in embodiments not contact the trough in the second open trough configuration.

The term "lifting element" may especially relate to a plurality of (different) lifting elements. The lifting element may essentially comprise any element that may lift or lower another element. The lifting element may e.g. comprise one or more of a chain, a connection rod, a push or a pull rod, magnetic elements, a worm gear, etc. In embodiments, the lifting element is pneumatically or hydraulically coupled to the one or more support elements (or to one or more of the lid elements and/or the troughs). Yet, in other embodiments, the lifting element may be physically or magnetically coupled to the one or more support elements (or to one or more of the lid elements and/or the troughs). The lifting element is in embodiments mechanically coupled to the one or more support elements.

As described above, (at least a part of) the troughs may especially be arranged in a plane. The troughs (or trough elements) may be arranged in a plane parallel to a plane of the support structure. The troughs may in embodiments be accessible (in the open configuration) from one side of a (central) plane of the support structure. The troughs may in further embodiments be accessible (in the open configuration) from both sides of the (central) plane of the support structure. The second array (of trough elements, especially of troughs) may further comprise a first subset of the troughs and a second subset of the troughs. In further embodiments, the troughs of the first subset and the troughs of the second subset are configured at opposite sides of a (central) plane of the support structure. Additionally or alternatively, the troughs of the first subset and the troughs of the second subset are configured for pivoting in opposite directions relative to the support structure.

The system may further especially comprise a feed supply system (or "feed system"), configured for supplying feed to the troughs. In embodiments, the feed system may be configured for supplying feed to at least a subset of the troughs in the closed trough configuration. Additionally or alternatively, the feed system may be configured for providing feed to at least a subset of the troughs in the (first) open trough configuration. For instance, feed may be provided to the troughs in the open configuration and successively the troughs may be set (configured) in the closed configuration. The feed system may be configured for (simultaneously or sequentially) providing feed to all of the troughs. In further embodiments, the feed system may be configured to provide feed to a subset of the troughs. Further, the feed may in embodiments be provided to the feed arrangement (especially the troughs) at a first location, while the feed arrangement is used (for feeding chicks) at another locations. Likewise, the troughs may be used to feed at a first location and the troughs may be cleaned at another location. The term "feed (supply) system" may refer to a plurality of (different) feed (supply) systems.

In embodiments at least part of the system, especially the support system, is at least partly movable or transportable. In embodiments the support system further comprises one or more transport elements configured for moving the support system. The one or more transport elements may e.g. comprise a wheel and/or a sliding element.

In further embodiments, the system further comprises a liquid supply system. The liquid supply system may especially be configured for supplying liquid to hatched chicks, especially to hatched chicks in any one of the baskets (of the stack of baskets). Additionally or alternatively, the liquid supply system may be configured for providing liquid to (the content of) the troughs. In embodiments, the liquid supply system comprises one or more (drinking) nipples arranged at a first side of one or more (especially at least a subset) of the lid elements, wherein the first sides are configured to face the trough (inside) in the closed trough configuration (at least partly closed by the (respective) lid element). The (drinking) nipples may in such embodiments e.g. be accessible (only) in the open trough configuration. In further embodiments, the nipples may be used to fill the trough in the closed configuration. In embodiments, the nipples may be actuated by touching the nipples. Additionally or alternatively, the nipples may be actuated by a control system (see further below). The liquid supply system may further comprise tubing, piping or the like for (fluidly) connecting the nipples to a liquid supply. The liquid supply system may in embodiments comprise a nipple drinking system. Additionally or alternatively, the liquid supply system may comprise one or more (at least partly) open liquid channels for holding the liquid. The (open) liquid channels may in embodiments be configured for hosting and/or transporting the liquid. Especially, one or more (especially at least a subset) of the lid elements comprises at least one of the (at least partly) open liquid channels at a further side of the lid element (wherein the further side is arranged) opposite to the first side. Using (open) channels, may allow flowing of the liquid trough the channels and as such may allow refreshing the liquid. The liquid supply system may be configured to (continuously) provide liquid to the channels. A flow of the liquid (to and/or through) the channels may be controlled. The liquid supply system may comprise or be functionally coupled to a control unit and/or control system.

In further embodiments, the system further comprises a lighting system comprising one or more light sources. The lighting system may especially be configured for illuminating (feed in) the troughs. The lighting system may further be configured for lighting the drinking nipples and/or the liquid channels. In embodiments, the light comprises visible light, especially light visible to the human eye. The light may especially comprise white light. In further embodiments, the light may comprise UV light. Hence, in embodiments the light comprises one or more wavelengths in the range of visible light and UV light.

The terms "visible", "visible light" or "visible emission" and similar terms refer to light having one or more wavelengths in the range of about 380-780 nm. Herein, "UV", "UV light" and similar terms may especially refer to a wavelength selected from the range of 200-380 nm.

The lighting system, especially the light sources, may be configured to provide light to one or more of (the inside of) the troughs in the open configuration. The light may especially be provided as a beam of light. The (beam of) light may comprise an optical axis. The term "optical axis" may refer to a direction of the beam, especially a (longitudinal) path of light propagating in the beam of light. The term may refer to a longitudinal axis of the beam. The light sources may (further) be configured for providing the light to one or more of the drinking nipples and/or the liquid channel(s). The light sources may especially be arranged adjacent to an extreme (or end) (especially both extremes) of one or more (especially substantially all) of the troughs. The light sources may be arranged to provide the light (beam) comprising the optical axis substantially parallel to the longitudinal axis of the one or more of the troughs (in the open configuration). Hence, in embodiments, the light source(s) may be arranged to provide a beam of light / beams of light (having a longitudinal axis of the beam) substantially parallel to the longitudinal axis of the one or more of the troughs (in the open configuration). The optical axis or beam and the longitudinal axis may e.g. at maximum define an angle of 15°, such as at maximum 10°, especially at maximum 5°. The optical axis (beam) (of the light source lighting the specific trough) is especially configured parallel to the longitudinal axis (of the specific trough). Especially, (each of) the light sources of the subset of (a total number of) light sources are arranged (with the trough in the open configuration) between a (any one of the) trough and a respective lid element. At least part of the light sources of the subset of light sources may be arranged during operation at predetermined levels between each of the troughs and a respective lid element The respective lid element especially refers to the lid element closing the trough at least partly in the closed configuration. In embodiments, at least a subset of the total number of the light sources is configured at the support structure. In further embodiments, additionally or alternatively, the light sources may be arranged remote from the support structure. The light sources may in embodiments be configured portable. Portable light sources may e.g. be configured for mounting on a door a wall of an incubator chamber (in specific embodiment configured for hosting the system).

The light sources may especially be selected for providing relatively much light in relation to heat. In embodiments, the one or more light sources comprise light emitting diodes (LEDs).

In further embodiments, the system further comprises a stack of baskets, especially wherein the stack of baskets is arranged adjacent to the support structure. The stack of baskets is especially arranged such that any one of the baskets is arranged adjacent to at least one of the troughs (in the open configuration). Especially, the system is configured for allowing hatched chicks in any one of the baskets to retrieve (pick) feed material from one or more of the troughs in the open configuration. In further embodiments, the system is (further) configured for allowing hatched chicks in any one of the baskets to drink liquid supplied by the liquid supply system, especially at least with the troughs in the open configuration. The support system is especially comprised by the feeding arrangement, and especially not part of other parts of the system, such as the basket(s). The support system may in embodiments be connected to other parts of the system. The support system may in embodiments connected to and/or separated from the basket(s). The support system may especially be connectable to the (stack of) baskets. The support system and the stack of baskets may engageable be configured in the system.

The term "basket" may especially refer to one or more baskets selected from the group of hatcher baskets and chick baskets. Essentially, hatcher baskets and chick baskets may be similar. Yet, the term "hatcher basket" is commonly used for baskets used in an incubator or a hatchery. The term "chick basket" is more commonly used in a chick storage room. Other terms that may also be used to refer to such baskets are chicken egg basket, hatcher tray, egg tray etc. The term "stack of baskets" especially refers to a plurality (at least two) baskets stacked on top of each other. The term includes layers comprising more than one basket, wherein the layers are stacked. In specific embodiments, the layer comprises a single basket. A stack of ten baskets may thus especially comprise ten baskets on top of each other. Moreover, a stack of any arbitrary number of baskets may especially comprise said number of baskets arranged on top of each other. Further, the term "stack of baskets" may relate to a hatcher pallet trolley. The baskets may especially comprise a closed floor. The baskets may further comprise an open top. Especially, the closed floor of a first basked is at least partly arranged in the open top of a further basket. A (side) wall of the basket may further comprise one or more openings allowing a chick to at least partly move its head through (to reach for, e.g., feed), see further below.

The baskets may especially be configured for allowing light to enter the basket or for allowing light to pass through the basket. The one or more openings may further be configured for light to enter or pass the baskets. Moreover the light sources may be configured for providing light to the one or more openings. Further, in embodiments at least a part of one or more of the baskets is made of a light transmissive material being transmissive for at least part of the light. The baskets may e.g. be at least partly transparent. The basket may comprise one or more portions comprising the light transmissive material. For instance, the wall of the basket may comprise one or more wall portions comprising transmissive material. In embodiments, the floor of the basket comprises one or more portions comprising light transmissive material. In further embodiments, substantially the entire basket is made of light transmissive material. A non-limiting list of light transmissive materials that may be used to make the basket and/or the window for instance comprises an acylate (especially polymethylmethacrylate), a butyrate (e.g. cellulose acetate butyrate), a polycarbonate, polypropylene, polyethylene, and glycol modified polyethylene terephthalate (PETG).

Additionally or alternatively at least a part of one or more of the baskets is made of a reflective material being reflective for at least part of the light and/or comprises a reflective element (being reflective for at least part of the light). The reflective element may comprise the reflective material. A reflective element may e.g. comprise a reflective coating. A wall of the basket may in embodiments be made or comprise a reflective material. The reflective material may comprise a metal material (or a metal film). The reflective material may be substantially white or may comprise a white coating. The basket may at least partly be made of a polymer comprising a reflective, such as a white. filler material or pigment. A wall may comprise a metallic coating or e.g. a white coating. In further embodiments, the support structure or other parts of the system may comprise reflective elements. One or more of the light sources may e.g. be arranged at a reflective element. Further, one or more of the light sources may e.g. be arranged to provide the light to the reflective element/reflective material. The reflective material may further be configured for scattering the light. The reflective element (reflective material) may have a rough surface or, e.g., comprise light scattering elements. Also the transmissive material may in embodiments be selected for diffusing at least part of the light.

In specific embodiments at least a subset, especially all, of the baskets are substantially identical. This may facilitate stacking of the baskets.

Especially, the stack of baskets is arranged close to the trough to allow the chicks to eat (and/or drink) from the troughs. In embodiments, (for each of the baskets) an edge of the at least one adjacently arranged trough in the (first) open configuration is arranged aligned with a plane of the respective basket. The plane may especially be (configured) parallel to the floor of the basket, more especially at a distance from the floor selected in the range of 0-50 mm, especially from the range of 0-40 mm. The distance from the floor may in embodiments be at least 5 mm, such as at least 10 mm, or even at least 15 mm. Further, especially a (smallest) distance between the hatcher basket and the edge of the at least one adjacently arranged trough (in the open configuration, especially the first open configuration) is selected in the range of 0-20 mm, especially 0-10 mm. The edge may in embodiments be arranged contacting the basket (in the - first- open configuration). A distance between the hatcher basket and the edge of 0 mm may indicate that the trough (at least partly) contacts the hatcher basket. It is noted that in embodiments, the hatcher basket may support the trough. This may imply that when the stack of hatcher baskets is arranged further remote from the support system, in embodiments, the trough may (also) be arranged further remote from the lid elements (especially based on gravity) and again the trough may contact the hatcher basket. In embodiments, the support element may not necessarily support the trough in the open trough configuration.

In embodiments, the smallest distance between the basket and the trough is 0-20 mm, especially 0-10 mm, at a level of 0-50 mm, especially 0-40 mm, such as 10-40 mm above the floor of the basket (during operation). In the closed configuration the above given distances may be different because of any translation and/or pivoting of the troughs.

The baskets may have an opening in a wall of the basket configured for facing the trough for allowing a chick to stick its head trough, to reach to feed in the trough (see also above). The opening is especially configured to prevent the chick to fall out of the basket. The opening is especially smaller in at least one dimension than the chick. In embodiments, a smallest dimension of the opening is in the range of 15-25 mm, such as 18-25 mm, or even more especially equal to or smaller than 25 mm, such as equal to or smaller than 22 mm. In embodiments the smallest dimension of the opening is about 20±5 mm, especially 20±2 mm. The smallest dimension may e.g. be a width of the opening, or a height of the opening. The opening may be larger in another dimension. In embodiments, e.g. a smallest dimension may be in the range given above and a further dimension perpendicular to the smallest dimension may be larger than 2 cm, such as at least 5 cm, especially at least 7 cm. The further dimension may in embodiments equal 90% or even 95% of a size of the basket, such as a width of the basket or a height of the basket. In further embodiments the further dimension is equal to or smaller than 10 cm, such as equal to or smaller than 7 cm, especially equal to or smaller than 5 cm. The term opening may especially relate to a plurality of (identical) openings. In embodiments, e.g., the wall of the baskets configured for facing the trough may comprise a series of openings having a width of about 20 mm arranged next to each other. The openings are especially configured for aligning with the trough in the open configuration. A smallest distance between the opening and the trough in the open configuration may e.g. be in the range of 0-20 mm, especially in the range of 0-10 mm.

It is noted that the given dimensions are related to dimensions of the chick. Herein, the invention is especially described in relation to a chick of a chicken. The given dimensions especially relate to the chick of the chicken. It will be understood that the feeding systems may also be used for chicks of other types of (domestic) birds, like geese, ducks, or turkeys. Especially, the dimensions may be selected based on dimensions of the chick. If dimensions of the chick (such as a size of the head) of another type of bird is double or triple the respective dimension of the chick of a chicken, the above given (smallest) dimension may also be selected double or triple as large, respectively.

Hence, in embodiments the troughs of at least a subgroup of the troughs are arranged parallel to a plane of the support structure and parallel to each other. Especially a distance between adjacently arranged troughs (especially configured above each other during operation) of the subgroup in the open configuration is constant.

In further specific embodiments, the system comprises one or more stacks of baskets and the feeding arrangement comprises a plurality of support structures and a plurality of second arrays (of trough elements) (connected to / engaged with a respective support structure (of each of the support structures)). In further embodiments, each stack of baskets is arranged adjacent to two of the support structures sandwiching the stack. The system may in embodiments (thus) be configured for allowing hatched chicks in any one of the baskets to retrieve feed material from the troughs connected to (engaged with) two support structures sandwiching (enclosing) the stack comprising the basket. In specific embodiments (for each of the support structures,) the trough elements of each second array are pivotably connected to a respective support structure.

The term "wall" in wall of the basket may especially refer to more than one wall, such as two walls for baskets being sandwiched by two support elements. The term may in embodiments refer to the entire circumferential wall of the basket.

The stack of baskets may especially be arranged at a trolley. Further, to facilitate the desired arrangement of the stack of baskets relative to the support structures, one or more of the support structures may comprise a guiding element. In embodiments, the one or more support structures further comprises a stack guiding element configured for guiding the stack of baskets relative to the support structure for arranging the stack adjacent to the one or more support structures.

In a further aspect, the invention provides the system according to claim 1, for incubating and hatching eggs. In an aspect, the invention provides an incubator chamber according to claim 13 comprising the system. The incubator chamber (or room) is especially a hatcher. The incubator chamber may in embodiments (also) comprise a lighting system as described above in relation to the system. In embodiments, one or more light sources are configured at a wall of the incubator chamber. In further embodiments, one or more light sources may be configured at a door of the incubator chamber. The light sources are especially configured for providing light to (the interior of) one or more of the troughs, especially in the open configuration.

The invention further provides a chick storage room according to claim 14 comprising the system described herein. As described above, (embodiments of) the system, especially at least the support structure, may be mobile and especially self-standing. As such, the system, especially at least the support structure, may e.g. be moved from an incubator chamber to another location, such as to a storage room for newly hatched chick. The system may be moved alone, or e.g. in combination with the stack of baskets. The system described herein may especially be used in the hatching process of chicks and/or in the storage process of (newly) hatched chicks. Moreover, the incubator of the invention and/or the system described herein may be used in the hatching process. In embodiments, the storage room and/or the system of the invention may be used in the storage process of hatched chicks.

In a further aspect, the invention provides a method for hatching eggs, using according to claim 15 the system or the incubator chamber described herein.

The method especially comprises a hatching stage. The hatching stage may comprise providing (i) a stack of hatcher baskets comprising fertilized eggs and (ii) the system in the incubator, wherein the stack of baskets is arranged close to the troughs such that hatched chicks in (any one of) the baskets are allowed to eat (and/or drink) from the troughs in the open trough configuration. In further embodiments, the method comprises providing feed to the baskets. The method further may comprise configuring the troughs (comprising feed) in the closed configuration until one or more eggs are hatched. Further, the method specially comprises configuring at least part of the troughs in the (first) open configuration when one or more eggs are hatched, and especially feeding the hatched chicks. Controlling the trough configuration may in embodiments be done from a location external from the incubator.

In embodiments, the method may further comprise a cleaning stage. The cleaning stage especially comprises cleaning of the troughs. Cleaning may in embodiments comprise cleaning the troughs using a cleaning fluid. The cleaning stage further especially comprises configuring the troughs in the in the second open trough configuration. In the second open configuration, the cleaning fluid may clean the trough and (the cleaning fluid may) may be released (together with any dirt and/or remains of feed) from the trough based on gravity. This way the troughs may be thoroughly cleaned and may be reused while maintaining high hygienic standards.

The cleaning stage is especially configured after the hatching stage. Moreover, in embodiments the stack of baskets is removed from the incubator prior to cleaning the troughs. In embodiments, the system is removed from the incubator before cleaning the troughs. The embodiments described above in relation to the system of the present invention, may also apply for the method and use of the invention (and vice versa).

The term "controlling" and similar terms especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc. Beyond that, the term "controlling" and similar terms may additionally include monitoring. Hence, the term "controlling" and similar terms may include imposing behavior on an element and also imposing behavior on an element and monitoring the element. The controlling of the element can be done with a control system, which may also be indicated as "controller". The control system and the element may thus at least temporarily, or permanently, functionally be coupled. The element may comprise the control system. The element may comprise a control unit. In embodiments a control unit is functionally coupled to a control system. In further embodiments, the control system may comprise the control unit. In embodiments, the control system and element may not be physically coupled. Control can be done via wired and/or wireless control. The term "control system" may also refer to a plurality of different control systems, which especially are functionally coupled, and of which e.g. one control system may be a master control system and one or more others may be slave control systems. A control system may comprise or may be functionally coupled to a user interface. The term "control unit" may refer to a plurality of (different) control units. Likewise, the term "control system" may relate to a plurality of (different) control systems.

The control system may also be configured to receive and execute instructions from a remote control. In embodiments, the control system may be controlled via an App on a device, such as a portable device, like a Smartphone or I-phone, a tablet, etc.

The system, or apparatus, or device may execute an action in a "mode" or "operation mode" or "mode of operation". Likewise, in a method an action or stage, or step may be executed in a "mode" or "operation mode" or "mode of operation" or "operational mode". The term "mode" may also be indicated as "controlling mode". This does not exclude that the system, or apparatus, or device may also be adapted for providing another controlling mode, or a plurality of other controlling modes. Likewise, this may not exclude that before executing the mode and/or after executing the mode one or more other modes may be executed.

However, in embodiments a control system may be available, that is adapted to provide at least the controlling mode. Would other modes be available, the choice of such modes may especially be executed via a user interface, though other options, like executing a mode in dependence of a sensor signal or a (time) scheme, may also be possible. The operation mode may in embodiments also refer to a system, or apparatus, or device, that can only operate in a single operation mode (i.e. "on", without further tunability).

Hence, in embodiments, the control system may control in dependence of one or more of an input signal of a user interface, a sensor signal (of a sensor), and a timer. The term "timer" may refer to a clock and/or a predetermined time scheme.

### BRIEF DESCRIPTION OF THE DRAWINGS

Embodiments of the invention will now be described, by way of example only, with reference to the accompanying schematic drawings in which corresponding reference symbols indicate corresponding parts, and in which: Fig. 1 schematically depicts aspects of the system of the invention; Fig. 2 depicts an embodiment of the support structure; Fig. 3A to Fig. 3E depict some further aspects of the system, especially of embodiments of the trough and the lid element; Fig. 4 depicts some further aspects of the system; and Fig. 5 depicts an embodiment of an incubator chamber of the invention.

The schematic drawings are not necessarily to scale.

### DETAILED DESCRIPTION OF THE EMBODIMENTS

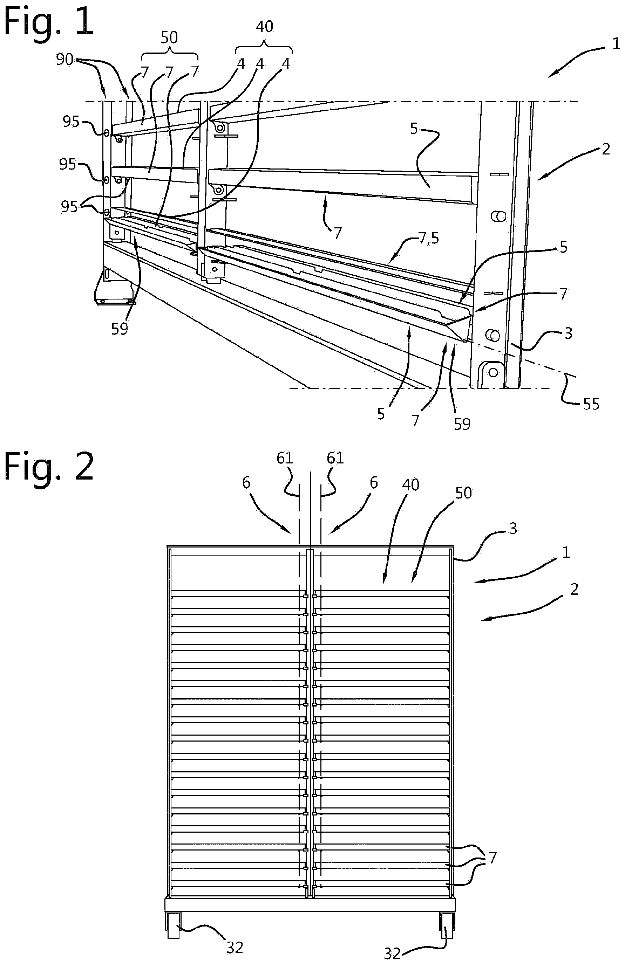

Fig. 1 schematically depicts an enlarged part of an embodiment of the system 1 comprising the feeding arrangement 2. The enlarged part is generally comparable to the system 1 depicted in Fig. 2 (although some further aspects are depicted). The system 1 is especially configured for feeding hatched chicks in a stack 88 of baskets 8, such as hatcher baskets or storage room baskets used in a hatchery or storage room for chicks. The feeding arrangement 2 comprises a support structure 3 comprising a first array 40 of lid elements 4 and a second array 50 of trough elements 7. Especially, each trough element 7 comprises a trough 5. The lid elements 4 are connected to the support structure 3. Also, the trough elements 7 are connected to the support structure 3. In the depicted embodiment, two troughs 5 may be closed by a single respective lid element 4. Yet, in other embodiments one lid element 4 may be used to close a single respective trough 5, or e.g. more than one lid element 4 may be configured for closing one respective trough 5, or one lid element 4 may be configured to close a plurality of troughs 5. Also further options are possible. Especially, one or more of the troughs 5 and one or more of the lid elements 4 define a functional unit of lid element(s) 4 and trough(s) 5.

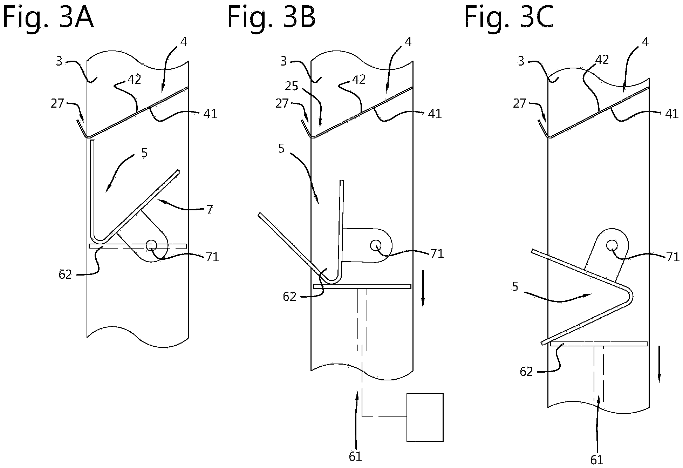

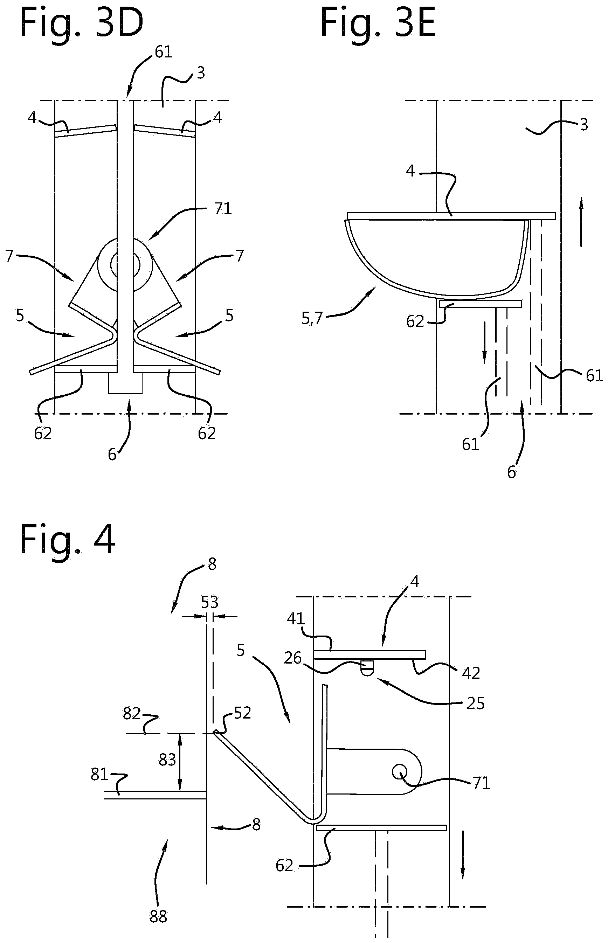

Moreover, each of the troughs 5 has a controllable configuration relative to the respective lid element 4 (of such functional unit). In a closed trough configuration, the trough 5 is at least partly closed by at least one of the lid elements 4 as is depicted in the figure for the (eight) pictured upper troughs 5 (four troughs 5 depicted at the front side and four troughs 5 at the back side). In the open trough configuration, the trough 5 is configured at least partly remote from the at least one of the lid elements 4. As such the trough 5 is open and any trough content of the trough 5 (such as feed) is accessible. Herein, this (trough content being accessible) may also be simply indicated by "the trough is accessible". In the closed configuration, especially no content of the trough is accessible. Herein this may also be indicated as "the trough is closed". The open configuration is depicted for the lower two pairs of troughs 5. In the depicted embodiment, the troughs 5 in the open configuration are pivoted away from the support structure 3. In other embodiments, the configuration of the troughs 5 and lid elements 4 may be different, e.g. as described in relation with the figures 3.

In Fig. 1 further a longitudinal axis of one of the troughs is indicated by reference 55, and one of the extremes for two of the troughs 5 are indicated by reference 59. It is note that the axis 55 not necessarily is straight. The troughs 5 may e.g. be curved or have an angle. Likewise the axis 55 may have such geometry. Also the support structure 3 may have such geometry.

The embodiment depicted in Fig. 2 further comprises transport elements 32, such as wheels. As such, the system 1 is configured for moving (at least) the support system 3. Further, in Fig. 1 also an embodiment of a lighting system 90 is indicated, see further below.

In the Figures 3 some aspects and some possible configurations of lid element 4 and (respective) trough 5 are depicted. The configuration of the trough 5 (open or closed) may be based on different types of trough element 7 and/or lid element 4 configurations. In embodiments, e.g., the lid elements 4 are movably connected to the support structure 3, wherein the lid elements 4 are configured to translate relative to the trough elements 7. In further embodiments, the trough elements 7 (and especially therewith the troughs 5) are movably connected to the support structure 3, wherein the trough elements 7 are configured to translate relative to the lid elements 4. The trough elements 7 may comprise a coupling element connected to the trough. The coupling element may be configured for connecting the trough element 7 to the support structure 3. In embodiments, the coupling element may be a sliding coupling element. In further embodiments, the coupling element may be a hinge element. Also the lid element 4 may comprise a coupling element especially for connecting the lid element 4 to the support structure 3. Some translating options are very schematically depicted in the embodiment of Fig. 3E, wherein the lid element 4 may be lifted to give access to the trough 5 and/or the trough 5, especially the trough element 7, may be lowered to give access to the trough 5. In such embodiment, the lid elements 4 and/or the trough element 7 may comprise such sliding coupling element (not shown, but e.g. at extremes of the lid element 4 and/or the trough element 7). It is noted that both options are depicted for illustration purposes. In embodiments the system 1 is configured for moving the lid 4 away from the trough 5 or for moving the trough 5 away from the lid 4. However, embodiments comprising elements for moving both the trough 5 and the lid 4 are also covered by the invention. In Fig. 3E, further a support element 62 supporting the trough 5 is depicted. The support element 62 is coupled to a lifting element 61, such as a comprising a hydraulic circuit or pneumatic circuit (partly indicated in Fig. 3E), and/or or e.g. comprising a mechanical coupling. By controlling the lifting element 61, the position of the trough 5 may be controlled to be open or closed. Herein this is also indicated as the system 1 is configured such that a position of the support element 62 controls the trough configuration of the one or more of the troughs 5 and a translation movement of the support element 62 allows the one or more of the troughs 5 to translate. This translation may be based on gravity.

In other embodiments, see Figs 3A-3D, the lid elements 4 are statically connected to the support structure 3. These figures further depict embodiments wherein the trough elements 7 are pivotably connected to the support structure 3, wherein in the open trough configuration, the trough 5 is pivoted away from the support structure 3. In the depicted embodiments, the trough element 7 comprise a hinge element connecting the trough 5 to the support 3.

Further, Fig. 3A depicts an embodiment wherein the trough is in the closed configurations. Figs 3B-3D depict the trough 5 in the open configuration. Moreover, in Fig. 3B, the trough 5 is in the first open trough configuration. In the first open configuration, the trough 5 is configured for hosting feed material in the trough 5 (during operation). Figs 3C and 3D depict the trough 5 in the second open trough configuration. In the second open trough configuration, the trough 5 is configured for releasing feed material under the influence of gravity (during operation).

The feeding arrangement 2 further especially comprises a trough configuration system 6 configured for controlling the trough configuration. The trough configuration system may e.g. be configured for translating one or more of the one or more of the lid elements 4 and one or more of the trough elements 7 as is depicted in Fig. 3E. The trough configuration system 6 may e.g. be configured for pivoting one or more of the troughs 5, as is e.g. depicted in Figs 3A-3D. Figs 3A-3D further illustrate that the trough 5 is configured for pivoting around a pivot axis 71 of the trough element 7. The pivot axis 71 is in these embodiments configured remote from the trough 5. Especially, the hinge element pivots at the pivot axis 71.

In specific embodiments, the trough configuration system 6 is configured for simultaneously controlling the trough configuration of at least a subset of the troughs 5. The trough configuration system 6 may e.g. be configured for pivoting at least a subset of the troughs 5. Also combinations of translating (troughs 5 and or lid elements 4) and pivoting (troughs 5) are possible in further embodiments (not shown). Moreover, in other embodiments (also) the lid elements 4 may be connected pivotable to the support structure 3 (also not shown). Essentially, a (on or more) lid element 4 is configured movable relative to a (one or more) respective trough element 7 (especially trough 5).

In the figures 3A-3D, the trough configuration system 6 comprises the lifting element 61 functionally coupled to a support element 62 supporting the troughs 5 at least in the closed configuration. Moreover, a position of the support element 62 controls the trough configuration of the trough 5 and a translation movement of the support element 62 allows the trough 5 to pivot away from the support structure 3 based on gravity.

The embodiments depicted in Figs 3A-3C further depict aspects of the liquid supply system 25. Also in Fig. 4 the liquid supply system 25 is depicted. In Fig. 4, the liquid supply system 25 comprises one or more drinking nipples 26 arranged at a first side 41 of the lid element 4 facing the trough 5 in the closed trough configuration. In Figs 3A-3C the liquid supply system 25 comprises one or more open liquid channels 27 for holding the liquid, wherein one or more of the lid elements 4 comprise at least one of the open liquid channels 27 at a further side 42 of the lid element 4 opposite to the first side 41. In embodiments a chick may drink from the drinking nipple 26 by actuated (contacting) the nipple. In further embodiments, the drinking nipple 26 may be connected to the control system. The nipple 26 may e.g. in embodiments by actuated by the control system, wherein the liquid may be provided to the trough 5 (content).

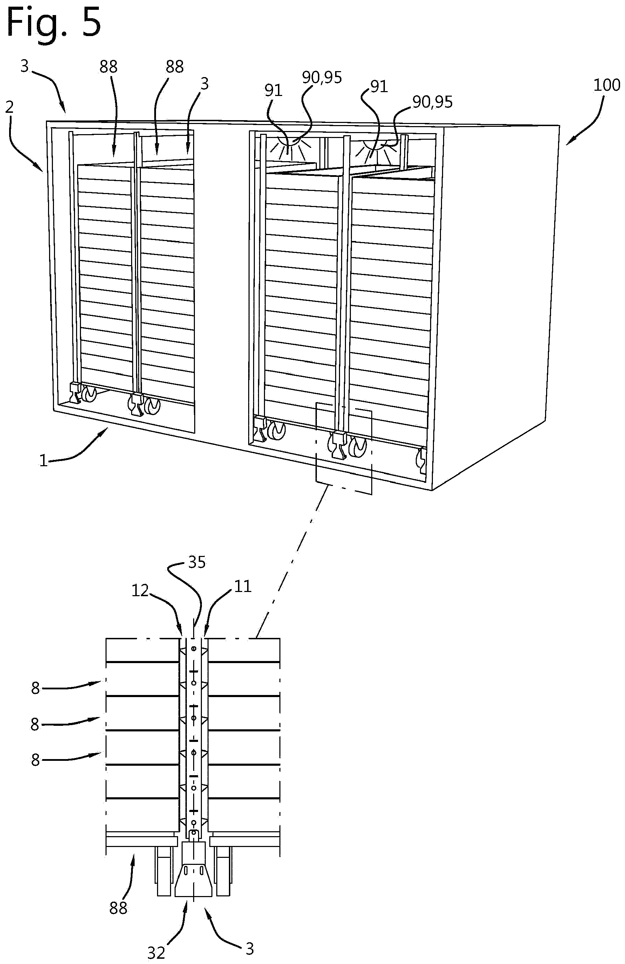

As described above, embodiments of the system 1 may further comprise a lighting system 90 comprising one or more light sources 95 (see e.g. Fig. 1 and Fig. 5). The light sources may especially be configured to provide light 91 to one or more of the troughs 5 in the open configuration. The light 91 especially comprises a beam of light 91. Herein, also the term optical axis is used, especially relating to a longitudinal axis of the beam of light 91 provided by the light source 95. The light sources 95 may further especially be configured providing light 91 comprising one or more of visible light and UV light. The light 91 may in embodiments comprise white light. In Fig. 1 an embodiment of (part of) the lighting system 90 is depicted. In that embodiment at least a subset of the light sources 95 is configured at the support structure 3 adjacent to extremes 59 of some of the troughs 5 to provide the light 91 in a direction of the longitudinal axis 55 of the troughs 5 in the open configuration. In the embodiment, the subset is attached to the support structure 3. The figure depicts that the light sources 95 of are arranged (during operation) at a level between each of the troughs 5 and a respective lid element 4, i.e. at a level below the lid element 4 and above the respective trough element 5 in the open configuration. It will be understood that the subset may also be arranged remote from the support structure 3 to provide the light 91 to the troughs 5. For instance, if the system 1 is arranged in an incubator chamber 100 or the system comprises the incubator chamber 100, the subset of light sources 95 may be mounted in the incubator chamber 100. The one or more light sources 95 may especially comprise light emitting diodes (LEDs).

Fig. 4 further depicts an enlarged view of a part of an embodiment of the system 1 further comprising a stack 88 of baskets 8, wherein the stack 88 of baskets 8 is arranged adjacent to the support structure 3. In the figure only a part of one of the baskets 8 is depicted. The baskets 8 is arranged adjacent to at least one of the troughs 5, and especially the system 1 is configured for allowing hatched chicks in the baskets 8 to retrieve (pick) feed material (not shown) from the trough 5 in the open configuration. The figure further illustrates that an edge 52 of the adjacently arranged trough 5 in the open configuration is arranged aligned with a plane 82 of the respective basket 8 parallel to a floor 81 of the basket 8. The plane 82 is arranged at a distance 83 from the floor 81. The distance 83 may in embodiments be in the range of 0-40 mm, such as in the range of 15-40 mm. Further, a distance 53 between the basket 8 the edge 52 of the at least one adjacently arranged trough 5 is specially in the range of 0-20 mm. The troughs 5 may especially be configured for contacting the baskets 8 in the open trough configuration (wherein the distance 53 is zero).

Also Fig. 5 depicts an embodiment of the system 1 further comprising a stack 88 of baskets 8. Moreover, the embodiment schematically illustrates an embodiment of the system 1 comprising more than one stack 88 of baskets 8. Furthermore (also) the feeding arrangement 2 comprises a plurality of support structures 3 and a plurality of second arrays 50 of trough elements 7. In the embodiment each stack 88 of baskets 8 is arranged adjacent to two of the support structures 3 sandwiching the stack 88, allowing hatched chicks in any one of the baskets 8 to retrieve (pick) feed material from at least one of the troughs 5 connected to any one of the two support structures 3 sandwiching the stack 88 comprising the basket 8. It is noted that one support structure 3 comprising troughs 5 at both sides of the central plane 35 may be arranged between two stacks 88 of baskets as is illustrated in the figure. Yet, the support structures 3 being arranged adjacent to only one stack 88 of baskets 8 may only comprise troughs 5 accessible and/or extending from one side of the support structure (in the open configuration of the trough), such as e.g. depicted in Figs 3A-3C and Fig. 3E.

Fig. 5 (and also in Figs 1-2 and Fig. 3D) depicts (parts of) the system 1 wherein the second array 50 (of trough elements 7) comprises a first subset 11 of the troughs 5 and a second subset 12 of the troughs 5. wherein the troughs 5 of the first subset 11 and the troughs 5 of the second subset 12 are configured at opposite sides of a central plane 35 of the support structure 3. Moreover, the troughs 5 of the first subset 11 and the troughs 5 of the second subset 12 are configured for pivoting in opposite directions relative to the support structure 3.

In Fig. 5 also some light sources 95 of the lighting system 90 are depicted at a top of stack 88 of baskets 8. Also this way, the light 91 may be provided to the troughs 5 (in the open configuration). Additionally or alternatively light sources 95 may be arranged at the door of the incubator chamber 100 (the door is for illustrative purposes not shown in the figure) or e.g. a wall opposite and/or adjacent to the door and especially configured for providing the light 61 to the toughs 5 (in the open configuration). To further facilitate light 91 emitted by the light source 95 to illuminate the trough 5, in embodiments, at least part of the baskets 8 is made of a light transmissive material being transmissive for at least part of the light 91. In further embodiments (also) at least part of the baskets 8 is made of a reflective material being reflective for at least part of the light 91.

Fig. 5 also illustrates an embodiment of an incubator chamber 100, especially a hatcher, comprising the system 1. The system 1, especially the support structure 3 may in embodiments comprise transport elements 32 and may therefore in embodiments easily be transported. For instance, when the eggs are hatched, the system 1 (including the stack 88 of baskets or separate from the stack 88 of baskets 8) may be transported from the incubator chamber 100 to a chick storage room to further allow the newly hatched chicks to eat.

Hence, the invention further provides for a chick storage room comprising the system 1. Moreover, the baskets 8 may especially comprise one or more baskets selected from the group of hatcher baskets and chick baskets. The system 1, the incubator chamber 100 and/or the chick storage room described herein may especially be used in the hatching process and/or the storage process of hatched chicks.

The term "plurality" refers to two or more. Furthermore, the terms "a plurality of" and "a number of" may be used interchangeably. The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%. For numerical values it is to be understood that the terms "substantially", "essentially", "about", and "approximately" may also relate to the range of 90% - 110%, such as 95%-105%, especially 99%-101% of the values(s) it refers to.

The term "comprise" also includes embodiments wherein the term "comprises" means "consists of". The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention may be implemented by means of hardware comprising several distinct elements, and by means of a suitably programmed computer. In a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage.

The disclosure also provides a control system that may control the device, apparatus, or system, or that may execute the herein described method or process. Yet further, the disclosure also provides a computer program product, when running on a computer which is functionally coupled to or comprised by the device, apparatus, or system, controls one or more controllable elements of such device, apparatus, or system.

The disclosure also provides a device, apparatus, or system comprising one or more of the characterizing features described in the description and/or shown in the attached drawings. The disclosure further provides a method or process comprising one or more of the characterizing features described in the description and/or shown in the attached drawings.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

## Claims

1. A system (1) comprising a feeding arrangement (2) for feeding hatched chicks in a stack of baskets, wherein the feeding arrangement (2) comprises: (i) a support structure (3), (ii) a first array (40) of lid elements (4), wherein the lid elements are connected to the support structure (3), and (iii) a second array (50) of trough elements (7), each comprising a trough (5), wherein the trough elements (7) are connected to the support structure (3), wherein one or more of:
(i) the lid elements (4) are movably connected to the support structure (3), wherein the lid elements (4) are configured to translate relative to the trough elements (7), and
(ii) the trough elements (7) are movably connected to the support structure (3), wherein (iia) the trough elements (7) are configured to translate relative to the lid elements (4) and/or (iib) the trough elements (7) are configured to pivot relative to the support structure (3);
wherein the troughs (5) have a controllable configuration relative to the lid elements (4); wherein the controllable configuration comprises at least two trough configurations for each of the troughs (5), wherein (i) in a closed trough configuration, the trough (5) is at least partly closed by at least one of the lid elements (4), and (ii) in an open trough configuration, the trough (5) is configured at least partly remote from the at least one of the lid elements (4), wherein a trough content of the trough (5) is accessible;
wherein the system (1) is configured for arranging a stack (88) of baskets (8) adjacent to the support structure (3), wherein any one of the baskets (8) is arranged adjacent to at least one of the troughs (5), allowing hatched chicks in any one of the baskets (8) to retrieve feed material from one or more of the troughs (5) in the open configuration.

2. The system (1) according to claim 1, wherein the lid elements (4) are statically connected to the support structure (3).

3. The system (1) according to any one of the preceding claims, wherein the trough elements (7) are pivotably connected to the support structure (3), wherein in the open trough configuration, the trough (5) is pivoted away from the support structure (3).

4. The system (1) according to any of the preceding claims, wherein the open trough configuration comprises a first open trough configuration and a second open trough configuration, wherein:
(i) in the first open trough configuration, the trough (5) is arranged for hosting feed material in the trough (5), and
(ii) in the second open trough configuration, the trough (5) is arranged for releasing feed material under the influence of gravity.

5. The system (1) according to any one of the preceding claims, wherein the feeding arrangement (2) further comprises a trough configuration system (6) configured for one or more of:
- translating one or more of the lid elements (4);
- translating one or more of the trough elements (7); and
- pivoting one or more of the troughs (5).

6. The system (1) according to claim 5, wherein the trough configuration system (6) is configured for simultaneously pivoting at least a subset of a total number of the troughs (5), wherein the trough configuration system (6) comprises a lifting element (61) functionally coupled to one or more support elements (62) supporting one or more of the troughs (5) in the closed configuration, wherein the system (1) is configured such that a position of the support element (62) controls the trough configuration of the one or more of the troughs (5) and a translation movement of the support element (62) allows the one or more of the troughs (5) (i) to translate based on gravity and/or (ii) to pivot away from the support structure (3) based on gravity.

7. The system (1) according to any one of the preceding claims, wherein the second array (50) comprises a first subset (11) of a total number of the troughs (5) and a second subset (12) of the total number of the troughs (5), wherein one or more of
- the troughs (5) of the first subset (11) and the troughs (5) of the second subset (12) are configured at opposite sides of a central plane (35) of the support structure (3), and
- the troughs (5) of the first subset (11) and the troughs (5) of the second subset (12) are configured for pivoting in opposite directions relative to the support structure (3).

8. The system (1) according to any one of the preceding claims, wherein the system (1) further comprises one or more of (i) a feed supply system, configured for supplying feed to the troughs (5) and (ii) a liquid supply system (25), wherein one or more of:
(iia) the liquid supply system (25) comprises one or more drinking nipples (26) arranged at a first side (41) of one or more of the lid elements (4), wherein the first side (41) is configured to face the trough (5) in the closed trough configuration, and
(iib) the liquid supply system (25) comprises one or more open liquid channels (27) for holding the liquid, wherein one or more of the lid elements (4) comprise at least one of the open liquid channels (27) at a further side (42) of the lid element (4) opposite to the first side (41).

9. The system (1) according to any one of the preceding claims, wherein the support system (3) further comprises one or more transport elements (32) configured for moving the support system (3).

10. The system (1) according to any one of the preceding claims, further comprising the stack (88) of baskets (8)arranged adjacent to the support structure (3.

11. The system (1) according to claim 10, wherein the system (1) comprises one or more stacks (88) of baskets (8), wherein the feeding arrangement (2) comprises a plurality of support structures (3) and a plurality of second arrays (50) of trough elements (7), wherein each stack (88) of baskets (8) is arranged adjacent to two of the support structures (3) sandwiching the stack (88), wherein the system (1) is configured for allowing hatched chicks in any one of the baskets (8) to retrieve feed material from the troughs (5) connected to the two support structures (3) sandwiching the stack (88) comprising the basket (8).

12. The system (1) according to any one of the preceding claims, further comprising a lighting system (90) comprising one or more light sources (95) configured to provide light (91) to one or more of the troughs (5) in the open configuration.

13. An incubator chamber (100) comprising the system (1) according to any one of the claims 1-12.

14. A chick storage room comprising the system (1) according to any one of the claims 1-12.

15. Use of the system (1) according to any one of the claims 1-12 in a hatching process of chicks and/or a storage process of hatched chicks.

## Patentansprüche

1. System (1), umfassend eine Fütterungsanordnung (2) zum Füttern geschlüpfter Küken in einem Stapel aus Körben, wobei die Fütterungsanordnung (2) umfasst: (i) eine Stützstruktur (3), (ii) eine erste Anordnung (40) aus Deckelelementen (4), wobei die Deckelelemente mit der Stützstruktur (3) verbunden sind, und (iii) eine zweite Anordnung (50) aus Trogelementen (7), die jeweils einen Trog (5) umfassen, wobei die Trogelemente (7) mit der Stützstruktur (3) verbunden sind, wobei eins oder mehrere:
(i) der Deckelelemente (4) beweglich mit der Stützstruktur (3) verbunden sind, wobei die Deckelelemente (4) dazu ausgelegt sind, sich bezogen auf die Trogelemente (7) linear zu bewegen, und
(ii) der Trogelemente (7) beweglich mit der Stützstruktur (3) verbunden sind, wobei (iia) die Trogelemente (7) dazu ausgelegt sind, sich bezogen auf die Deckelelemente (4) linear zu bewegen und/oder (iib) die Trogelemente (7) dazu ausgelegt sind, bezogen auf die Stützstruktur (3) zu schwenken;
wobei die Tröge (5) eine steuerbare Auslegung bezogen auf die Deckelelemente (4) haben; wobei die steuerbare Auslegung mindestens zwei Trogauslegungen für jeden der Tröge (5) umfasst, wobei (i) in einer geschlossenen Trogauslegung der Trog (5) mindestens teilweise von mindestens einem der Deckelelemente (4) geschlossen ist, und (ii) in einer offenen Trogauslegung der Trog (5) mindestens teilweise von dem mindestens einen der Deckelelemente (4) entfernt ausgelegt ist, wobei ein Troginhalt des Trogs (5) zugänglich ist;
wobei das System (1) zum Anordnen eines Stapels (88) aus Körben (8) angrenzend an die Stützstruktur (3) ausgelegt ist, wobei jeder der Körbe (8) angrenzend an mindestens einen der Tröge (5) angeordnet ist, was den geschlüpften Küken in jedem der Körbe (8) ermöglicht, Futtermittel aus einem oder mehreren der Tröge (5) in der offenen Auslegung zu entnehmen.

2. System (1) nach Anspruch 1, wobei die Deckelelemente (4) statisch mit der Stützstruktur (3) verbunden sind.

3. System (1) nach einem der vorhergehenden Ansprüche, wobei die Trogelemente (7) schwenkbar mit der Stützstruktur (3) verbunden sind, wobei in der offenen Trogauslegung der Trog (5) von der Stützstruktur (3) weggeschwenkt ist.

4. System (1) nach einem der vorhergehenden Ansprüche, wobei die offene Trogauslegung eine erste offene Trogauslegung und eine zweite offene Trogauslegung umfasst, wobei:
(i) in der ersten offenen Trogauslegung der Trog (5) zum Aufnehmen von Futtermittel in dem Trog (5) angeordnet ist, und
(ii) in der zweiten offenen Trogauslegung der Trog (5) zum Freigeben von Futtermittel unter Schwerkrafteinwirkung angeordnet ist.

5. System (1) nach einem der vorhergehenden Ansprüche, wobei die Fütterungsanordnung (2) ferner ein Trogauslegungssystem (6) umfasst, das ausgelegt ist für eins oder mehrere von:
- linearem Bewegen von einem oder mehreren der Deckelelemente (4);
- linearem Bewegen von einem oder mehreren der Trogelemente (7); und
- Schwenken von einem oder mehreren der Trogelemente (5).

6. System (1) nach Anspruch 5, wobei das Trogauslegungssystem (6) zum gleichzeitigen Schwenken von mindestens einem Teilsatz einer Gesamtzahl der Tröge (5) ausgelegt ist, wobei das Trogauslegungssystem (6) ein Hebeelement (61) umfasst, das funktional mit einem oder mehreren Stützelementen (62) gekoppelt ist, die einen oder mehrere der Tröge (5) in der geschlossenen Auslegung stützen, wobei das System (1) derart ausgelegt ist, dass eine Position des Stützelementes (62) die Trogauslegung des einen oder der mehreren der Tröge (5) steuert und eine Translationsbewegung des Stützelements (62) ermöglicht, dass der eine oder die mehreren der Tröge (5) (i) sich basierend auf der Schwerkraft linear bewegen und/oder (ii) basierend auf der Schwerkraft von der Stützstruktur (3) wegschwenken.

7. System (1) nach einem der vorhergehenden Ansprüche, wobei die zweite Anordnung (50) einen ersten Teilsatz (11) einer Gesamtzahl der Tröge (5) und einen zweiten Teilsatz (12) der Gesamtzahl der Tröge (5) umfasst, wobei einer oder mehrere
- der Tröge (5) des ersten Teilsatzes (11) und der Tröge (5) des zweiten Teilsatzes (12) auf gegenüberliegenden Seiten einer Mittelebene (35) der Stützstruktur (3) ausgelegt sind, und
- der Tröge (5) des ersten Teilsatzes (11) und der Tröge (5) des zweiten Teilsatzes (12) zum Schwenken in entgegengesetzte Richtungen bezogen auf die Stützstruktur (3) ausgelegt sind.

8. System (1) nach einem der vorhergehenden Ansprüche, wobei das System (1) ferner einen oder mehrere von (i) einem Futterzuführsystem, das zum Zuführen von Futter in die Tröge (5) ausgelegt ist, und (ii) einem Flüssigkeitszuführsystem (25) umfasst, wobei eins oder mehrere von:
(iia) dem Flüssigkeitszuführsystem (25) einen oder
mehrere Trinknippel (26) umfasst, die auf einer ersten Seite (41) von einem oder mehreren der Deckelelemente (4) angeordnet sind, wobei die erste Seite (41) dazu ausgelegt ist, dem Trog (5) in der geschlossenen Trogauslegung zugewandt zu sein, und
(iib) dem Flüssigkeitssystem (25) einen oder mehrere offene Flüssigkeitskanäle (27) zum Aufnehmen der Flüssigkeit umfasst, wobei eins oder mehrere der Deckelelemente (4) mindestens einen der offenen Flüssigkeitskanäle (27) auf einer weiteren Seite (42) des Deckelelements (4) gegenüber der ersten Seite (41) umfasst.

9. System (1) nach einem der vorhergehenden Ansprüche, wobei das Stützsystem (3) ferner ein oder mehrere Transportelemente (32) umfasst, die zum Bewegen des Stützsystems (3) ausgelegt sind.

10. System (1) nach einem der vorhergehenden Ansprüche, ferner umfassend den Stapel (88) aus Körben (8), die angrenzend an die Stützstruktur (3) angeordnet sind.

11. System (1) nach Anspruch 10, wobei das System (1) einen oder mehrere Stapel (88) aus Körben (8) umfasst, wobei die Fütterungsanordnung (2) eine Vielzahl von Stützstrukturen (3) und eine Vielzahl von zweiten Anordnungen (50) von Trogelementen (7) umfasst, wobei jeder Stapel (88) aus Körben (8) angrenzend an zwei der Stützstrukturen (3) angeordnet ist und den Stapel (88) sandwichartig einschließt, wobei das System (1) dazu ausgelegt ist, geschlüpften Küken in jedem der Körbe (8) zu ermöglichen, Futter aus den Trögen (5) zu entnehmen, die mit den zwei Stützstrukturen (3) verbunden sind, die den Stapel (88), der den Korb (8) umfasst, sandwichartig einschließen.

12. System (1) nach einem der vorhergehenden Ansprüche, ferner umfassend ein Beleuchtungssystem (90), das eine oder mehrere Lichtquellen (95) umfasst, die dazu ausgelegt sind, einen oder mehrere der Tröge (5) in der offenen Auslegung mit Licht (91) zu versorgen.

13. Inkubatorkammer (100), umfassend das System (1) nach einem der Ansprüche 1-12.

14. Kükenaufbewahrungsraum, umfassend das System (1) nach einem der Ansprüche 1-12.

15. Verwendung des Systems (1) nach einem der Ansprüche 1-12 in einem Kükenschlüpfprozess und/oder Aufbewahrungsprozess der geschlüpften Küken.

## Revendications

1. Système (1) comprenant un dispositif d'alimentation (2) pour nourrir des poussins éclos dans une pile de paniers, le dispositif d'alimentation (2) comprenant : (i) une structure de support (3), (ii) un premier réseau (40) d'éléments de couvercle (4), les éléments de couvercle étant reliés à la structure de support (3), et (iii) un deuxième réseau (50) d'éléments d'auge (7), chacun comprenant une auge (5), les éléments d'auge (7) étant reliés à la structure de support (3), un ou plusieurs des éléments parmi :
(i) les éléments de couvercle (4) étant reliés de manière mobile à la structure de support (3), les éléments de couvercle (4) étant configurés pour se déplacer en translation par rapport aux éléments d'auge (7), et
(ii) les éléments d'auge (7) étant reliés de manière mobile à la structure de support (3), (iia) les éléments d'auge (7) étant configurés pour se déplacer en translation par rapport aux éléments de couvercle (4) et/ou (iib) les éléments d'auge (7) étant configurés pour pivoter par rapport à la structure de support (3),
les auges (5) ayant une configuration pouvant être commandée par rapport aux éléments de couvercle (4),
la configuration pouvant être commandée comprenant au moins deux configurations d'auge pour chacune des auges (5), (i) dans une configuration d'auge fermée, l'auge (5) étant au moins partiellement fermée par au moins un des éléments de couvercle (4), et (ii) dans une configuration d'auge ouverte, l'auge (5) étant configurée au moins partiellement à distance de l'au moins un des éléments de couvercle (4), un contenu d'auge de l'auge (5) étant accessible ;
le système (1) étant configuré pour disposer une pile (88) de paniers (8) de manière adjacente à la structure de support (3), l'un quelconque des paniers (8) étant disposé de manière adjacente à au moins une des auges (5), ce qui permet aux poussins éclos dans l'un quelconque des paniers (8) de récupérer des aliments dans une ou plusieurs des auges (5) dans la configuration ouverte.

2. Système (1) selon la revendication 1, les éléments de couvercle (4) étant reliés de manière statique à la structure de support (3).

3. Système (1) selon l'une quelconque des revendications précédentes, les éléments d'auge (7) étant reliés de manière pivotante à la structure de support (3), dans la configuration d'auge ouverte, l'auge (5) étant pivotée à l'écart de la structure de support (3).

4. Système (1) selon l'une quelconque des revendications précédentes, la configuration d'auge ouverte comprenant une première configuration d'auge ouverte et une deuxième configuration d'auge ouverte,
(i) dans la première configuration d'auge ouverte, l'auge (5) étant agencée pour accueillir le matériau d'alimentation dans l'auge (5), et
(ii) dans la deuxième configuration d'auge ouverte, l'auge (5) étant agencée pour libérer le matériau d'alimentation sous l'influence de la gravité.

5. Système (1) selon l'une quelconque des revendications précédentes, le dispositif d'alimentation (2) comprenant en outre un système de configuration d'auge (6) configuré pour un ou plusieurs des éléments suivants :
- la translation d'un ou de plusieurs des éléments de couvercle (4) ;
- la translation d'un ou de plusieurs des éléments d'auge (7) ; et
- le pivotement d'une ou de plusieurs des auges (5) .

6. Système (1) selon la revendication 5, le système de configuration d'auge (6) étant configuré pour faire pivoter simultanément au moins un sous-ensemble d'un nombre total des auges (5), le système de configuration d'auge (6) comprenant un élément de levage (61) fonctionnellement couplé à un ou plusieurs éléments de support (62) soutenant une ou plusieurs des auges (5) dans la configuration fermée, le système (1) étant configuré de telle sorte qu'une position de l'élément de support (62) commande la configuration d'auge de la ou des auges (5) et qu'un mouvement de translation de l'élément de support (62) permet à la ou aux auges (5) (i) de se translater en fonction de la gravité et/ou (ii) de pivoter en s'éloignant de la structure de support (3) sur la base de la gravité.

7. Système (1) selon l'une quelconque des revendications précédentes, le second réseau (50) comprenant un premier sous-ensemble (11) d'un nombre total des auges (5) et un second sous-ensemble (12) du nombre total des auges (5), une ou plusieurs parmi :
- les auges (5) du premier sous-ensemble (11) et les auges (5) du second sous-ensemble (12) étant configurées sur les côtés opposés d'un plan central (35) de la structure de support (3), et
- les auges (5) du premier sous-ensemble (11) et les auges (5) du second sous-ensemble (12) étant configurées pour pivoter dans des directions opposées par rapport à la structure de support (3).

8. Système (1) selon l'une quelconque des revendications précédentes, le système (1) comprenant en outre un ou plusieurs des éléments suivants : (i) un système d'alimentation, configuré pour alimenter les auges (5) et (ii) un système d'alimentation en liquide (25), un ou plusieurs parmi :
(iia) le système d'alimentation en liquide (25) comprenant un ou plusieurs abreuvoirs (26) disposés sur un premier côté (41) d'un ou de plusieurs éléments de couvercle (4), le premier côté (41) étant configuré pour faire face à l'auge (5) dans la configuration d'auge fermée, et
(iib) le système d'alimentation en liquide (25) comprenant un ou plusieurs canaux de liquide ouverts (27) pour contenir le liquide, un ou plusieurs des éléments de couvercle (4) comprenant au moins un des canaux de liquide ouverts (27) sur un autre côté (42) de l'élément de couvercle (4) opposé au premier côté (41).

9. Système (1) selon l'une quelconque des revendications précédentes, le système de support (3) comprenant en outre un ou plusieurs éléments de transport (32) configurés pour déplacer le système de support (3).

10. Système (1) selon l'une quelconque des revendications précédentes, comprenant en outre la pile (88) de paniers (8) agencés de manière adjacente à la structure de support (3).

11. Système (1) selon la revendication 10, le système (1) comprenant une ou plusieurs piles (88) de paniers (8), le dispositif d'alimentation (2) comprenant une pluralité de structures de support (3) et une pluralité de seconds réseaux (50) d'éléments d'auge (7), chaque pile (88) de paniers (8) étant agencée de manière adjacente à deux des structures de support (3) prenant en sandwich la pile (88), le système (1) étant configuré pour permettre aux poussins éclos dans l'un des paniers (8) de récupérer des aliments dans les auges (5) reliées aux deux structures de support (3) prenant en sandwich la pile (88) comprenant le panier (8).

12. Système (1) selon l'une quelconque des revendications précédentes, comprenant en outre un système d'éclairage (90) comprenant une ou plusieurs sources lumineuses (95) configurées pour fournir de la lumière (91) à une ou plusieurs des auges (5) dans la configuration ouverte.

13. Chambre d'incubation (100) comprenant le système (1) selon l'une quelconque des revendications 1 à 12.

14. Chambre de stockage de poussins comprenant le système (1) selon l'une quelconque des revendications 1 à 12.

15. Utilisation du système (1) selon l'une quelconque des revendications 1 à 12 dans un processus d'éclosion de poussins et/ou un processus de stockage de poussins éclos.
